# EUROPEAN PATENT APPLICATION

(11) **EP 4 207 052 A1**
(43) Date of publication of application: **05.07.2023**
(21) Application number: 22150055.6
(22) Date of filing: 03.01.2022
(51) Int. Cl.: G06T 3/40

(54) **FOVEATED IMAGE STITCHING**

(71) Applicant: Voysys AB, 602 26 Norrköping (SE)
(72) Inventor: Danielsson, Torkel, 587 29 Linköping (SE)
(74) Representative: AWA Sweden AB

(57) **Abstract**

The present disclosure relates to a computer-implemented method (M100) for stitching images (1, 2) representing the surroundings of an automated vehicle into a stitched view (3) and an image stitching system for an automated vehicle for use in said method. The method comprises the steps of: providing (M101), by means of respective image capturing units, two images (1, 2) representing surroundings of the automated vehicle, wherein the two images (1, 2) share an overlapping region (1a, 2a) of the surroundings from different viewpoints of the respective image capturing units; determining (M102) an image transformation between the two images (1, 2) based on pre-calculated calibration information, or feature matching of discernable features (6a, 6b, 6c) of the surroundings visible in said two images (1, 2); stitching (M103) the two images (1, 2) into a stitched view (3) with a respective image seam (5) between the two images (1, 2) based on said image transformation; displaying (M104) the stitched view (3) to an operator of the automated vehicle, and receiving (M105), by means of an operator input device, operator input data indicating the operator's viewpoint in the stitched view (3); determining (M106) a region of interest (4) within the stitched view (3) based on said operator input data; wherein the step of stitching the two images (1, 2) into a stitched view (3) involves determining a set of stitching solutions between the two images (1, 2) and selecting a stitching solution that results in a stitched view (3) with a stitching seam (5) that is displaced away a distance (d) from a point (4c) in the region of interest (4) in a direction towards the outside of the region of interest (4).

## Description

### Technical Field

The present disclosure relates to a computer-implemented method for stitching images representing the surroundings of an automated vehicle into a stitched view and an image stitching system for an automated vehicle for use in said method.

### Background

In the field of automated vehicles, it is imperative that image capturing systems provide reliable view of the surroundings. A plurality of imaging devices is often used which allows for a wider field of view than what a single imaging device can provide. However, this consequently requires accurate image stitching so that the impact of stitching artifacts is reduced. Stitching artifacts may result in erroneous interpretation of the surroundings of the automated vehicle which in turn leads to unsafe driving. Moreover, when stitching together images from different imaging devices, parts of one or more images will be thrown away. This may pose a problem whenever a part of a first image is thrown away contains key information not visible in a second image. Thus, there is a risk that key information may go unnoticed when performing image stitching.

In view of the above, it is desirable to reduce the impact stitching artifacts may have on interpreting the surroundings of the automated vehicle while preserving key information.

### Summary

It is an object of the present invention to provide an improved solution that alleviates the mentioned drawbacks with present solutions. A first object of the invention is to reduce the impact of stitching artifacts while preserving key information in representations of the surroundings of an automated vehicle. This object is solved by the invention according to claim 1. A second object of the invention is to provide an image stitching method that is suitable for providing accurate visual information when remote controlling an automated vehicle. This object is also solved by the invention according to claim 1. This object is also solved by the invention according to claim 1. Further advantageous variations are specified in the dependent claims.

The inventive concept generally involves tracking the gaze of an operator when looking at a displayed view of the surroundings of the automated vehicle where said view is formed by adaptively stitching images together based on tracked gaze location so that stitching seams are displaced away from where the operator is looking in the displayed view. This has the effect that the operator is provided with a reliable representation of the environment wherever he is looking. Stitching seams are located away from the operator's gaze location which indeed reduces the impact stitching artefacts may have on a driving operation of the automated vehicle. Safer operation of the automated vehicle is ultimately achieved. With this inventive concept in mind, the invention according to its various aspects is hereby summarized.

According to a first aspect of the invention, a computer-implemented method for stitching images representing the surroundings of an automated vehicle into a stitched view is provided. The method comprises a step of providing, by means of respective image capturing units, two images representing surroundings of the automated vehicle wherein the two images share an overlapping region of the surroundings from different viewpoints of the respective image capturing units. The method further comprises a step of determining an image transformation between the two images based on pre-calculated calibration information, or feature matching of discernable features of the surroundings visible in said two images. The method further comprises a step of stitching the two images into a stitched view with a respective image seam between the two images based on said image transformation. The method further comprises a step of displaying the stitched view to an operator of the automated vehicle. The method further comprises a step of receiving, by means of an operator input device, operator input data indicating the operator's viewpoint in the stitched view. The method further comprises a step of determining a region of interest within the stitched view based on said operator input data. The method is also such that the step of stitching the two images into a stitched view involves the step of determining a set of stitching solutions between the two images and selecting a stitching solution that results in a stitched view with a stitching seam that is displaced away a distance from a point in the region of interest in a direction towards the outside of the region of interest.

By this stitching method, the stitching seam between the two images is displaced away from a center of a region of interest, which means that an operator is not directly looking at a region where image artifacts may happen. Stitching seams are located away from the operator's gaze location which indeed reduces the impact stitching artefacts may have on a driving operation of the automated vehicle. Wherever the operator is looking, key information present in the image as captured by the image capturing devices is preserved after stitching. Thus, the method may reduce any impact of stitching artifacts while preserving key information in representations of the surroundings of an automated vehicle, thereby solving the first object of the invention. Due to displacing stitching seams away from the operator's gaze location or focus of attention, stitching seams are located towards to or in the operator's region of periphery vision, in which region the operator's ability of noticing small details is reduced. Thus, this image stitching method presents a beneficial tradeoff which makes it also suitable for providing accurate visual information when remote controlling an automated vehicle. Thereby, the second object of the invention is solved.

As disclosed above, the stitching method is intended to be used for stitching images captured by means of image capturing devices of an automated vehicle. By automated vehicle, it may be meant a vehicle that is remotely driven by an operator at a remote terminal, or a vehicle capable of driving on its own under supervision of an operator at a remote terminal which can assume operative control of the vehicle when desired. An automated vehicle may for instance be a car, a truck, a motorcycle, a construction vehicle, a train, an UAV or drone, an airplane, etc. Although the stitching method is disclosed in connection with the technical field of automated vehicles, it should be understood that the stitching method as such is not as such limited to this technical field. It could be applied to other video-related technical fields where stitching images is carried out.

Further, by operator, it may be meant a user with some operative control over the automated vehicle or at least provided with means allowing the user to assume at least some operative control of the automated vehicle when desired.

By stitched view, it may be meant a continuous representation of the surroundings constructed from at least two images and which can be displayed as a continuous segment on a display device, either a monitor or a VR headset or the like. The stitched view may however be displayed in parts, for instance a first part may be displayed on a first monitor and a second part may be displayed on a second monitor.

By surrounding of an automated vehicle, it may be meant at least a portion of the environment as seen from one or more image capturing units It may be a 360 view or only a partial view in the direction of vehicle movement in forward moving direction and/or in backward moving direction.

By stitching or image stitching, it may be meant the process of combining at least a first image and a second image into a combined image or stitched view. Naturally, the process may involve combining more images into a combined image or stitched view.

The stitching method herein disclosed makes use of image capturing units. These may be arranged inside or outside the automated vehicle. The image capturing units may be arranged to capture image in a forward moving direction of the automated vehicle. The image capturing units may be arranged to capture images in other directions, such as to the side or in a rear moving direction. The image capturing units may be cameras. The cameras may be of such types that are capable of capturing sufficient details of the environment for remote control application.

The stitching method may incorporate images from respective at least two image capturing units. When arranged at a distance from each other and directed to provide a overlapping field of view, adequate stitching must solve the problem of parallax effect, features within the overlapping region will appear to move around when looking at the same feature in the respective images. This effect is more significant the closer an object is to the image capturing units. This results in a problem of how to stitch images together, often leading to stitching artefacts. These may be mitigated to a degree by adequate image transformation. Generally, it is also desired to have a 15-30% overlap between any two images which are to be stitched together. Any two image capturing units may be arranged and directed so as to capture images with an overlap of at least 15%, potentially 15% up to 50%. Intervals may include 15-20%, 20-25%, 25-30%, 30-35%, 35-40%, 40-45%, or 45-50% or an interval formed by any combination of these intervals.

The stitching method comprises a step of determining an image transformation between the two images. This image transformation may be based on pre-calculated calibration information. This pre-calculated calibration information may be determined based on the relative position and orientation of the respective image capturing units. It may also account for light settings and other parameters. Alternatively, or in combination, the image transformation may be based on feature matching of discernible features of the surroundings visible in said two images. At least a portion of said discernible features can be viewed within the images corresponding to an overlapping region.

Operator input may be any device by which the operator may control the direction of the field of view of the stitched view or a gaze location within the stitched view. This information may then be used as operator input data in the stitching method. Further, the stitching method is adaptive based on the operator input data. The stitching method may iterate through one or more steps above at a high frequency, depending on the hardware on which the stitching method is carried out.

Although the stitching method discloses stitching two images together, the method may equally stitch together more than two images together, wherein each image is captured by means of a respective image capturing unit.

The region of interest may have a predetermined shape, such as a square, a rectangle, a circle or an ellipse. The region of interest may be adapted based on the type of display device used to display to the operator.

According to one embodiment, said point is a center point of said region of interest and said distance from said point is within the interval of 25% to 50% of the horizontal or vertical extension of the region of interest. The distance may be 25-30%, 30-35%, 35-40%, 40-45%, or 45-50%. By this, the stitch seam may be displaced further from a gaze location.

According to one embodiment, the step of stitching the two images into a stitched view is based on the location of the region of interest within the stitched view so that when the two images are stitched together to form the stitched view, the respective image seam is displaced fully outside the region of interest. By this, even further margin is achieved from a gaze location.

According to one embodiment, the method further comprises a step of displaying the stitched view at a remote terminal. The remote terminal may be equipped with one or more display units. The remote terminal may be equipped with a VR headset. The stitched view may be displayed partially or as a whole. The stitched view may be displayed in parts on one or more display units.

According to one embodiment, the stitched view within the region of interest is provided at a first resolution and the stitched view outside the region of interest is provided at a second resolution lower than the first resolution. By this, the overall amount of data per unit time to be transmitted may be reduced.

According to one embodiment, the two images are selected from an image group of mutually different images, each provided by a respective image capturing unit, each image of the image group sharing an overlapping region of the surroundings from different viewpoints of the respective image capturing units, wherein the selection of which two images are to be stitched together to create the stitched view is determined so that when the two images are stitched together to form the stitched view, the respective image seam is displaced away a distance from a point in the region of interest in a direction towards the outside of the region of interest. By this, the stitching method may adaptively select which images to stitch together in order to provide a stitched view where stitching seams are displaced adequately from a gaze location.

According to one embodiment, the stitched view is stitched together using more than two images, wherein each adjacent pair is selected so that when each adjacent image pair is stitched together to form the stitched view, the respective image seams are displaced away a distance from the point in the region of interest in a direction towards the outside of the region of interest. The stitched view resulting from stitching the plurality of images may be a 360-view of the surroundings of the automated vehicle.

According to a further embodiment, the number of images stitched together to form the stitched view is 3, 4, 5, 6, 7, 8, 9, 10 or more.

According to one embodiment, the vertical and horizontal extension of the overlapping region between any two images is such that the region of interest does not extend across the boundary of any image of said any two images. By this, a stitching solution where a stitching seam is displaced wholly outside the region of interest may always be found.

According to one embodiment, at least a portion of a stitching seam of any two images is moved to an opposite horizontal or vertical side of the region of interest when the proximate side of the region of interest is within a predetermined horizontal or vertical distance to said at least a portion of said stitching seam. By this, a stitching solution may be found even when the region of interest is relatively large compared to an overlapping region. The stitching method may be adapted to provide stitching solutions where a stitching seam comprises fully straight lines or at least partially curved.

According to a further embodiment the region of interest is characterized by a horizontal extension and a vertical extension and said predetermined horizontal or vertical distance is between 1-10% of the horizontal extension or the vertical extension respectively.

According to one embodiment, the operator input device is either: a gaze tracking device; a VR headset; a pointing device such as a computer mouse, joystick, or the like; a motion sensing input device; or a voice recognition input device.

According to a second aspect of the invention, an image stitching system for an automated vehicle is provided. The image stitching system comprises a processing unit adapted to perform the computer implemented method according to any preceding claims, at least two image capturing units configured to capture the respective at least two images, and an operator input device configured to an operator's viewpoint of the automated vehicle's surroundings. The image stitching system may comprise additional image capturing units in order to capture as many simultaneous images as required by the stitching method. They may be mutually arranged and directed so as to capture images with an overlap of at least 15%, potentially 15% up to 50%. Intervals may include 15-20%, 20-25%, 25-30%, 30-35%, 35-40%, 40-45%, or 45-50% or an interval formed by any combination of these intervals.

According to one embodiment, the operator input device is either: a gaze tracking device; a VR headset; a pointing device such as a computer mouse, joystick, or the like; a motion sensing input device; or a voice recognition input device.

According to one embodiment, two or more of the at least two image capturing units are members of a single image capturing device configured to capture images in at least two directions. Such image capturing device may be a omnidirectional imaging device.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a schematic representation of the method according to one embodiment of the invention;
Fig. 2 shows an illustration of a stitched view stitched together from two images according to one embodiment of the invention;
Fig. 3 shows an illustration of some of the steps of the method according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

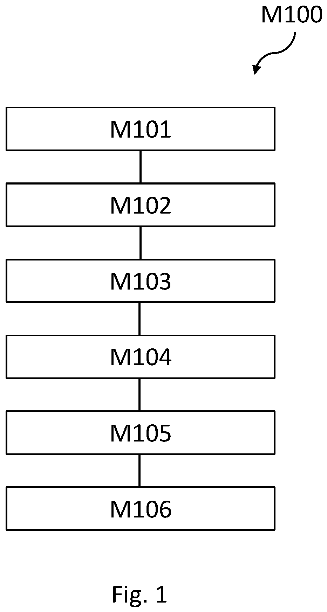

Fig. 1 shows a schematic representation of a computer-implemented method M100 according to one embodiment of the invention. The method M100 enables stitching of images 1, 2 representing the surroundings of an automated vehicle into a stitched view 3. The method M100 comprises a step of providing M101, by means of respective image capturing units, two images 1, 2 representing surroundings of the automated vehicle, wherein the two images 1, 2 share an overlapping region 1a, 2a of the surroundings from different viewpoints of the respective image capturing units. The method M100 comprises a step of determining M102 an image transformation between the two images 1, 2 based on pre-calculated calibration information, or feature matching of discernable features 6a, 6b, 6c of the surroundings visible in said two images 1, 2. The method M100 comprises a step of stitching M103 the two images 1, 2 into a stitched view 3 with a respective image seam 5 between the two images 1, 2 based on said image transformation. The method M100 comprises a step of displaying M104 the stitched view 3 to an operator of the automated vehicle. The method M100 comprises a step of receiving M105, by means of an operator input device, operator input data indicating the operator's viewpoint in the stitched view 3. The method M100 comprises a step of determining M106 a region of interest 4 within the stitched view 3 based on said operator input data. The method M100 is such that the step of stitching the two images 1, 2 into a stitched view 3 involves determining a set of stitching solutions between the two images 1,2 and selecting a stitching solution that results in a stitched view 3 with a stitching seam 5 that is displaced away a distance d from a point 4c in the region of interest 4 in a direction towards the outside of the region of interest 4.

The automated vehicle may for instance be a car, a truck, a motorcycle, a construction vehicle, a train, an UAV or drone, an airplane, etc.

The operator may be a user with some operative control over the automated vehicle or at least provided with means allowing the user to assume at least some operative control of the automated vehicle when desired.

The operator input device may comprise a gaze tracking device; a VR headset; a pointing device such as a computer mouse, joystick, or the like; a motion sensing input device; or a voice recognition input device.

By this method, the operator is provided with a stitched view where stitching seams are displaced away from a region of interest 4, preferably entirely outside the region of interest. This reduces the risk that the operator operates the automated vehicle, or allows it to carry out operation, based on erroneous images due to stitching artefacts. A safer driving is thus realized.

The method is implemented to be executed by hardware which allows very fast updating of the stitched view. Preferably, the method may be such that the stitched view is updated at an updating frequency of 30 - 60 Hz, or more.

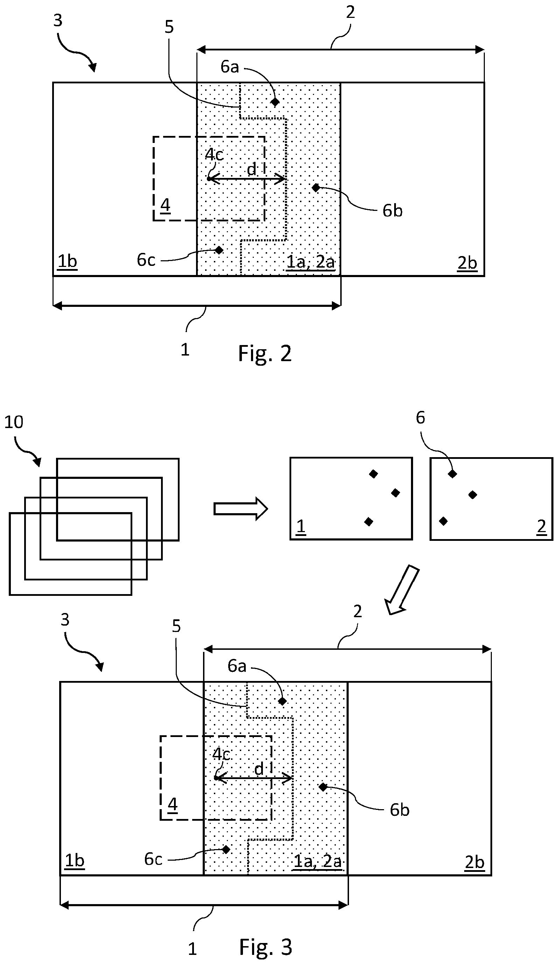

Fig. 2 shows an illustration of a stitched view stitched 3 together from two images 1, 2 according to one embodiment of the invention. The images 1, 2 are provided by image capturing units which are arranged and oriented such that the images 1, 2 have overlapping regions 1a, 2a and respective non-overlapping regions 1b, 2b. When stitched together by the stitching method M100 herein disclosed, a stitching solution is found wherein the stitching seam 5 is displaced a distance d from a point 4c of the region of interest 4. The point 4c may be a center point of the region of interest 4. The distance d from said point 4c may be within the interval of 25% to 50% of the horizontal or vertical extension of the region of interest 4. The stitching solution is found by first having to determine an image transformation between the two images 1, 2. This may preferably be based on pre-calculated calibration information which may involve relative position and orientation of the respective image capturing units. Alternatively, this may be based on feature matching of discernable features 6a, 6b, 6c of the surroundings visible in said two images 1, 2.

Fig. 3 shows an illustration of some of the steps of the method M100 according to one embodiment of the invention. In this embodiment, the two images 1, 2 are selected from an image group 10 of mutually different images, each provided by a respective image capturing unit, wherein each image of the image group 10 shares an overlapping region of the surroundings from different viewpoints of the respective image capturing units. The selection of which two images 1, 2 are to be stitched together to create the stitched view 3 is determined so that when the two images 1, 2 are stitched together to form the stitched view 3, the respective image seam 5 is displaced away a distance d from a point 4c in the region of interest 4in a direction towards the outside of the region of interest 4. The stitching solution is found by first determining an image transformation between the two images 1, 2. This may preferably be based on pre-calculated calibration information which may involve relative position and orientation of the respective image capturing units. Alternatively, this may be based on feature matching of discernable features 6a, 6b, 6c of the surroundings visible in said two images 1, 2.

The image group subject for selection may comprise anywhere from 3 to 10 or more images.

Further, although not shown, the stitched view 3 may be formed by stitching together more than two images 1, 2. The images may be stitched together in consecutive pairs of adjacent images in a horizontal direction and/or a vertical direction. The number of stitching seams thus depends on the number of images being stitched together. Each stitching seam 5 may be independently be adjusted so as to displace it relative the position of the region of interest 4. The number of images stitched together to form the stitched view (3) is 3, 4, 5, 6, 7, 8, 9, 10 or more.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A computer-implemented method (M100) for stitching images (1, 2) representing the surroundings of an automated vehicle into a stitched view (3), the method comprising the steps of:
providing (M101), by means of respective image capturing units, two images (1, 2) representing surroundings of the automated vehicle, wherein the two images (1, 2) share an overlapping region (1a, 2a) of the surroundings from different viewpoints of the respective image capturing units;
determining (M102) an image transformation between the two images (1, 2) based on pre-calculated calibration information, or feature matching of discernable features (6a, 6b, 6c) of the surroundings visible in said two images (1, 2);
stitching (M103) the two images (1, 2) into a stitched view (3) with a respective image seam (5) between the two images (1, 2) based on said image transformation;
displaying (M104) the stitched view (3) to an operator of the automated vehicle, and
receiving (M105), by means of an operator input device, operator input data indicating the operator's viewpoint in the stitched view (3);
determining (M106) a region of interest (4) within the stitched view (3) based on said operator input data;
wherein the step of stitching the two images (1, 2) into a stitched view (3) involves determining a set of stitching solutions between the two images (1, 2) and selecting a stitching solution that results in a stitched view (3) with a stitching seam (5) that is displaced away a distance (d) from a point (4c) in the region of interest (4) in a direction towards the outside of the region of interest (4).

2. Method according to claim 1, wherein said point (4c) is a center point of said region of interest (4) and said distance (d) from said point (4c) is within the interval of 25% to 50% of the horizontal or vertical extension of the region of interest (4).

3. Method according to claim 1, wherein the step of stitching the two images (1, 2) into a stitched view (3) is based on the location of the region of interest (4) within the stitched view (3) so that when the two images (1, 2) are stitched together to form the stitched view (3), the respective image seam (5) is displaced fully outside the region of interest (4).

4. Method according to any of claims 1-3, further comprising a step of displaying the stitched view (3) at a remote terminal.

5. Method according to any of claims 1-4, wherein the stitched view (3) within the region of interest (4) is provided at a first resolution and the stitched view outside the region of interest is provided at a second resolution lower than the first resolution.

6. Method according to any preceding claims, wherein the two images (1, 2) are selected from an image group (10) of mutually different images, each provided by a respective image capturing unit, each image of the image group (10) sharing an overlapping region of the surroundings from different viewpoints of the respective image capturing units, wherein the selection of which two images (1, 2) are to be stitched together to create the stitched view (3) is determined so that when the two images (1, 2) are stitched together to form the stitched view (3), the respective image seam (5) is displaced away a distance (d) from a point (4c) in the region of interest (4) in a direction towards the outside of the region of interest (4).

7. Method according to any preceding claims, wherein the stitched view (3) is stitched together using more than two images (1, 2), wherein each adjacent pair (1, 2) is selected so that when each adjacent image pair (1, 2) is stitched together to form the stitched view (3), the respective image seams (5) are displaced away a distance (d) from the point (4c) in the region of interest (4) in a direction towards the outside of the region of interest (4).

8. Method according to claim 7, wherein the number of images stitched together to form the stitched view (3) is 3, 4, 5, 6, 7, 8, 9, 10 or more.

9. Method according to any preceding claims, wherein the vertical and horizontal extension of the overlapping region between any two images is such that the region of interest (4) does not extend across the boundary of any image of said any two images.

10. Method according to any preceding claims, wherein at least a portion of a stitching seam of any two images is moved to an opposite horizontal or vertical side of the region of interest when the proximate side of the region of interest (4) is within a predetermined horizontal or vertical distance to said at least a portion of said stitching seam.

11. Method according to claim 10, wherein the region of interest (4) is **characterized by** a horizontal extension and a vertical extension and said predetermined horizontal or vertical distance is between 1-10% of the horizontal extension or the vertical extension respectively.

12. Method according to any preceding claims, wherein the operator input device is either: a gaze tracking device; a VR headset; a pointing device such as a computer mouse, joystick, or the like; a motion sensing input device; or a voice recognition input device.

13. An image stitching system for an automated vehicle, comprising a processing unit adapted to perform the computer implemented method according to any preceding claims, at least two image capturing units configured to capture the respective at least two images, and an operator input device configured to an operator's viewpoint of the automated vehicle's surroundings.

14. The image stitching system according to claim 13, wherein the operator input device is either: a gaze tracking device; a VR headset; a pointing device such as a computer mouse, joystick, or the like; a motion sensing input device; or a voice recognition input device.

15. The image stitching system according to any of claims 13-14, wherein two or more of the at least two image capturing units are members of a single image capturing device configured to capture images in at least two directions.
